# EUROPEAN PATENT APPLICATION

(11) **EP 4 130 734 A1**
(43) Date of publication of application: **08.02.2023**
(21) Application number: 21828427.1
(22) Date of filing: 22.06.2021
(51) Int. Cl.: G01N 31/12, G01N 1/22

(54) **SAMPLE CONTAINER AND ELEMENT ANALYSIS DEVICE**

(30) Priority: 26.06.2020 JP 2020110762
(71) Applicant: HORIBA, Ltd., Kyoto-shi, Kyoto 601-8510 (JP)
(72) Inventor: KAWAKAMI, Shun, Kyoto-shi, Kyoto 601-8510 (JP); YONESHIGE, Hidenaru, Kyoto-shi, Kyoto 601-8510 (JP); IKEGAMI, Kohei, Kyoto-shi, Kyoto 601-8510 (JP)
(74) Representative: Isarpatent
(86) International application number: PCT/JP2021/023603
(87) International publication number: WO 2021/261487

(57) **Abstract**

In order to provide a sample container that is capable of accommodating even a non-standard size solid sample as long as the sample has a size that can be inserted into a heating furnace, and can be easily taken in and out of the heating furnace, a sample container 100 used in an element analysis device 200 that heats a sample W and extracts and analyzes a component gas, and inserted into a heating furnace Z1 included in the element analysis device 200 in a state of accommodating the sample W, includes at least a cylindrical side wall 1 having a substantially hollow cylindrical shape, an end surface portion 2 provided at one end of the cylindrical side wall 1 and including at least a pressed surface 3 to be pressed by a rod Y221 when being inserted into the heating furnace Z1, and a vent hole 4 through which a gas passes when the sample W is heated, and a hooked portion 5 which is provided at the one end of the cylindrical side wall 1 and on which a rod is hooked when being taken out from the inside of the heating furnace Z31.

## Description

### Technical field

The present invention relates to a sample container used in an element analysis device that heats a sample, extracts a component gas, and analyzes the component gas.

### Background Art

For example, an element analysis device is used to analyze elements of inorganic substances such as carbon (C) and sulfur (S) contained in samples of various metals and ceramics.

In such an element analysis device, for example, a powdery sample is inserted into a cylindrical heating furnace extending in a horizontal direction in a state of being accommodated in a boat type ceramic sample container, and heated and burned while supplying oxygen to extract a component gas (see Patent Literature 1). The sample container is pushed into the heating furnace by, for example, a rod of an automatic machine, and after the analysis is completed, the rod is hooked on a part of the sample container to pull out the sample container from the heating furnace.

Incidentally, for example, when a non-regular solid sample cannot be accommodated in a boat-shaped sample container, the solid sample itself is directly inserted into the heating furnace without using the sample container. Elemental analysis without such a sample container has a plurality of problems as follows.
1. In a case where the size and shape of the sample are not uniform and it is difficult to handle the sample with a rod or the like, it is particularly difficult to stably hold the sample at the time of insertion into the heating furnace by the automatic machine.
2. It is difficult to automate the loading and unloading of the sample, and thus it is difficult to keep the combustion time of the sample constant by keeping the time required for inserting the sample into the heating furnace or the time required for pulling out the sample from the heating furnace constant. This causes variations in results of elemental analysis.
3. If the sample can be accommodated in the sample container, the sample can be reliably inserted into the heating furnace, but when the sample is directly inserted into the heating furnace, it is necessary to make a selection in advance regarding whether the sample can be actually inserted into the heating furnace.

### Citation List

### Patent Literature

Patent Literature 1: JP 6-273288 A

### Summary of Invention

### Technical Problem

The present invention is intended to solve the above-described problems at once, and has an object to provide a sample container that can accommodate even a non-standard size solid sample, for example, as long as the sample has a size that can be inserted into a heating furnace, and can be easily taken in and out of the heating furnace.

### Solution to Problem

That is, a sample container according to the present invention is a sample container used in an element analysis device that heats a sample and extracts and analyzes a component gas, the sample container being inserted into a heating furnace included in the element analysis device in a state of accommodating the sample, the sample container including a cylindrical side wall having a substantially hollow cylindrical shape, an end surface portion provided at one end of the cylindrical side wall and including at least a pressed surface to be pressed by a rod when being inserted into the heating furnace, and a vent hole through which a gas passes when the sample is heated, and a hooked portion which is provided at the one end of the cylindrical side wall and on which a rod is hooked when being taken out from an inside of the heating furnace.

With such a configuration, a space for accommodating the sample can be formed larger inside the cylindrical side wall as compared with a conventional, for example, boat type sample container, and thus, for example, even if the sample is a non-standard shape solid, the sample is easily accommodated in the inside. Therefore, even a sample having a shape or size that is conventionally directly inserted into the heating furnace can be accommodated in the sample container. Consequently, stability of a holding state of the sample when the sample is inserted into or pulled out of the heating furnace can be enhanced.

In addition, since the sample is accommodated in the sample container in any shape, the sample is easily handled by an automatic machine. Thus, it is possible to keep the time required for taking in and out the sample container into and from the heating furnace constant, and it is possible to keep the heating time of the sample constant and suppress variation for each analysis.

Furthermore, since the sample is accommodated in a state of being covered in the cylindrical side wall, the sample is less likely to be directly heated as compared with a boat type sample container whose upper surface is largely opened, and a time at which combustion of the sample starts can be made later than in conventional cases. Thus, it is possible to sufficiently heat and desorb the element that causes contamination adhering to the sample container until the sample is burned and the component gas is generated. Therefore, contamination can be hardly generated at the stage where the sample burns to generate the component gas, and the analysis accuracy can be improved.

In addition, the blowing direction of the combustion gas for burning the sample can be changed by changing a size and position of the vent hole and a shape of the cylindrical side wall itself. Consequently, a combustion speed of the sample can be improved as compared with conventional cases.

In addition, if the sample can be accommodated in the sample container, it is not necessary to select a size or the like as to whether insertion into the heating furnace is possible as in a case of directly inserting the sample into the heating furnace.

In order to easily pull out the sample container in the heating furnace by hooking the sample container with a rod by the automatic machine while forming the volume of the sample storage space in the cylindrical side wall as large as possible, it is only required that the vent hole has a size through which a part of the rod is possible to pass, and the hooked portion is a surface on an inner side of the sample container at the end surface portion. With such a configuration, since the hooked portion exists at a predetermined position regardless of the circumferential direction of the sample container in the heating furnace, the rod is easily hooked on the sample container by the automatic machine.

In order to be make it possible to form the largest accommodation space for the sample, it is only required that the heating furnace includes a furnace main body having a substantially hollow cylindrical shape having a predetermined inner diameter dimension, and the cylindrical side wall has a substantially hollow cylindrical shape, and an outer shape dimension thereof is substantially the same as an inner diameter dimension of the furnace main body.

In order to facilitate insertion of the sample into the cylindrical side wall, a sample insertion port for inserting the sample into the sample container may be opened at another end of the cylindrical side wall, and an inner diameter dimension of the sample insertion port may be formed to be larger than an inner diameter dimension of the vent hole.

In order to prevent occurrence of contamination or the like due to contact of the rod with the sample at the time of insertion of the sample container into the heating furnace, it is only required to further include an entry prevention member that is provided on a side of the one end in the cylindrical side wall and prevents a rod inserted from the vent hole from entering a side of the other end from a predetermined position.

In order to make it possible to prevent the same element as the component gas to be analyzed from adhering in the sample container and to reduce the influence of contamination on the analysis result, it is sufficient if metal plating is applied to at least an outer peripheral surface or an inner peripheral surface of the cylindrical side wall.

In order to reduce the thermal conductivity of the sample container to make it possible that the combustion start time of the sample is later than in conventional cases, and to make the internal state of the sample easily visible, it is sufficient if at least the cylindrical side wall is formed of quartz glass.

In an element analysis device including the sample container according to the present invention and the heating furnace including a furnace main body having a cylindrical shape at least a part of which has an inner diameter dimension substantially coinciding with an outer diameter dimension in a radial direction in at least a part of the cylindrical side wall of the sample container, can perform the element analysis with higher accuracy even for a non-shaped solid sample, for example, which is conventionally directly inserted into the heating furnace. Advantageous Effects of Invention

As described above, with the sample container according to the present invention, a non-regular solid sample can be accommodated and stably held in the storage space in the cylindrical side wall. Thus, handling by the automatic machine or the like is facilitated, the time required for inserting the sample into the heating furnace is made constant, and variations in analysis can be suppressed. In addition, since the sample can be heated in a state where almost the entire sample is covered by the sample container, the start time of combustion of the sample can be made later than in conventional cases. Consequently, an element adhering to the sample container, which causes contamination, can be desorbed and removed before generation of the component gas, and analysis accuracy can be improved.

### Brief Description of Drawings

FIG. 1 is a schematic view illustrating a configuration of an element analysis device of the present embodiment.
FIG. 2 is a perspective view of a sample container used in the element analysis device of the embodiment.
FIG. 3 is a six-sided view of a sample container used in the element analysis device of the embodiment.
FIG. 4 is a schematic perspective view illustrating a hand that conveys the sample container of the embodiment.
FIG. 5 is a schematic view illustrating insertion of the sample container of the embodiment into a heating furnace and pulling out of the heating furnace.
FIG. 6 is a perspective view of a sample container used in an element analysis device according to another embodiment.
FIG. 7 is a six-sided view of a sample container used in an element analysis device according to another embodiment.
FIG. 8 is a schematic view illustrating a furnace main body and a sample container according to still another embodiment.
FIG. 9 is a schematic view illustrating a modification example of a metal-plated sample container.
FIG. 10 is a schematic view for explaining an element analysis method by heating in multiple stages.
FIG. 11 is a graph illustrating a relationship between a material of a sample container and a CO₂ generation amount in blank measurement.

### Reference Signs List

- 200: element analysis device
- 200X: stocker unit
- X1: storage shelf
- X2: handling mechanism
- 200Y: supply unit
- Y1: first supply mechanism
- Y2: second supply mechanism
- 200Z: analysis unit
- Z1: heating furnace
- W: sample
- 100: container
- 1: cylindrical side wall
- 2: end surface portion
- 3: pressed surface
- 4: vent hole
- 5: hooked portion
- 6: sample insertion port
- 7: entry prevention member

### Description of Embodiments

Hereinafter, a sample container 100 used in an element analysis device 200 according to an embodiment of the present invention will be described with reference to the drawings.

### <Device configuration>

The element analysis device 200 according to the present embodiment heats and combusts a sample W such as metal, and analyzes elements such as carbon (C) and sulfur (S) contained in the sample W from a component gas generated by the heating.

The element analysis device 200 includes a stocker unit 200X in which a plurality of sample containers 100 containing samples W is accommodated, an analysis unit 200Z that heats the sample containers 100 inserted into a heating furnace Z1 and performs element analysis of component gases extracted from the samples W, and a container supply unit 200Y that automatically supplies one of the sample containers from the stocker unit 200X to the analysis unit 200Z and takes in and out the sample containers 100 into and from the heating furnace Z1.

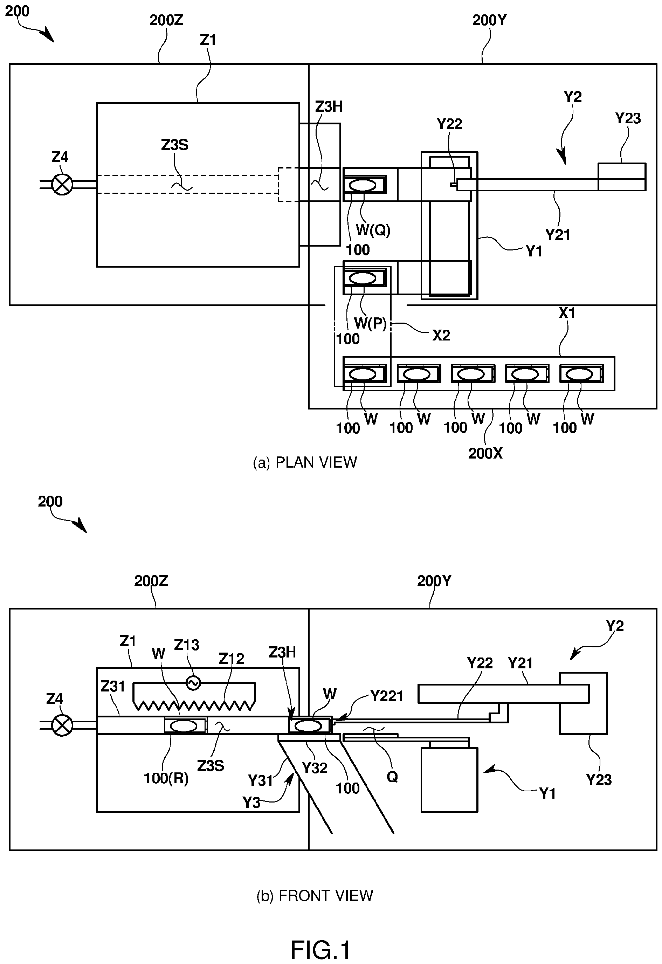

Each unit will be described in detail. As illustrated in FIG. 1, the analysis unit 200Z includes a heating furnace Z1 in which the sample container 100 is disposed, and a gas analyzer Z4 that analyzes a component gas generated from the samples W heated and burned in the heating furnace Z1.

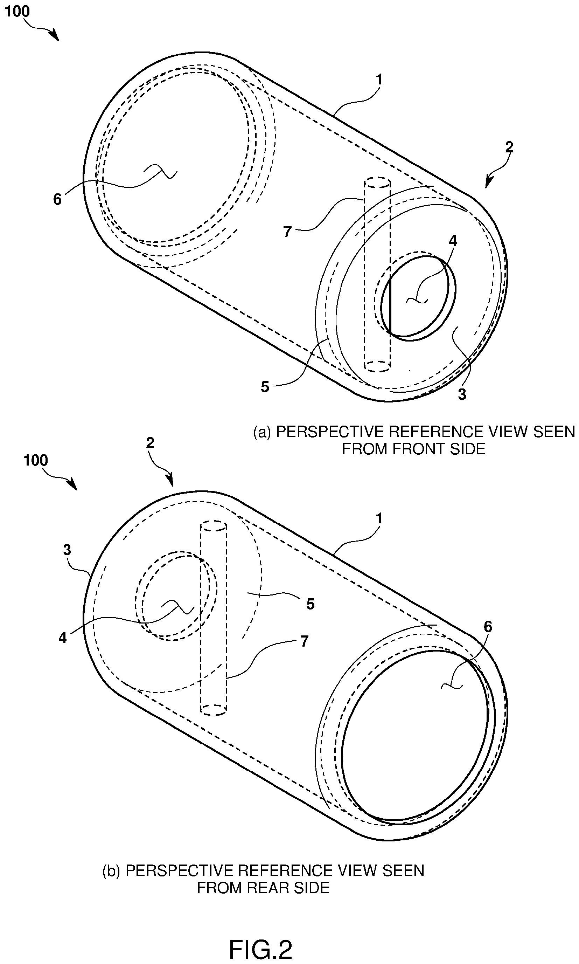

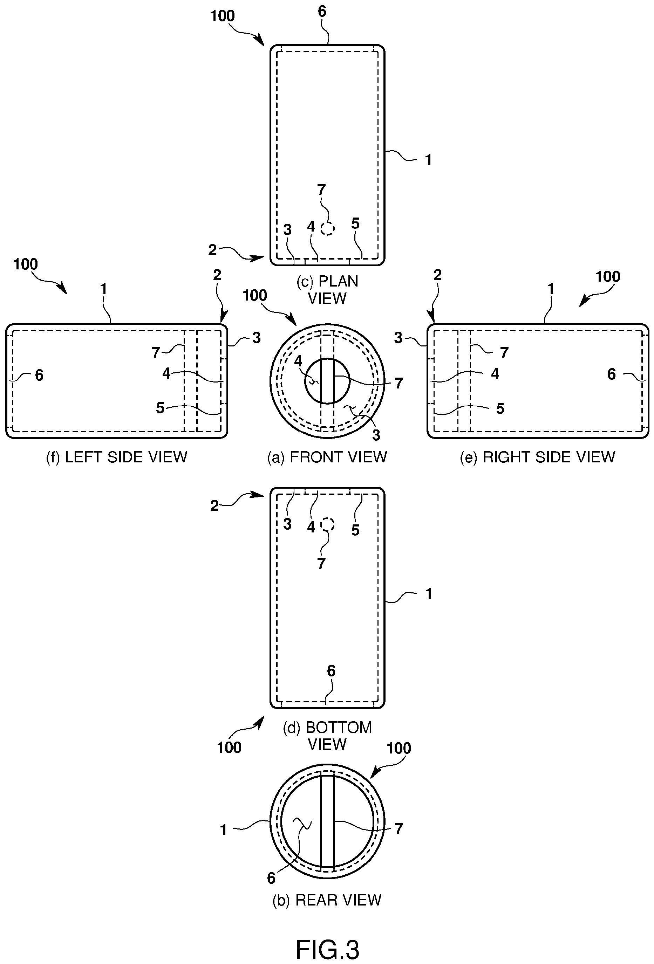

The sample container 100 accommodates, for example, a non-regular solid sample W therein, and the sample container 100 of the present embodiment has a substantially hollow cylindrical shape as illustrated in FIGS. 2 and 3. Note that, details of the sample container 100 will be described later.

As illustrated in FIG. 1, the heating furnace Z1 performs empty heating of the sample container 100 in which the sample W is not accommodated, or heats the sample container 100 in which the sample W is accommodated.

Specifically, the heating furnace Z1 has a space Z3S extending in the horizontal direction from the opening Z3H formed in a side wall, and the sample container 100 is disposed in the space Z3S. The heating furnace Z1 includes a furnace main body Z31 into which the sample container 100 is taken in and out, an electric resistor Z12 that is provided around the furnace main body Z31 and heats the furnace main body Z31, and a power supply circuit Z13 that supplies power to the electric resistor Z12 and causes the electric resistor Z to generate energized heat. Note that, in the present embodiment, the opening Z3H is formed in a front wall of the heating furnace Z1, and a substantially cylindrical space Z3S is formed in the depth direction from the opening Z3H.

The furnace main body Z31 is, for example, a cylindrical ceramic molded body, and has a space Z3S in which the sample container 100 can be accommodated. One end of the furnace main body Z31 communicates with the opening Z3H. Further, a gas outlet for leading the gas generated from the sample W to the gas analyzer Z4 is provided at the other end of the furnace main body Z31. Note that, as a heating method of the furnace main body Z31, a current may be passed through an electric resistance furnace to perform resistance heating (Joule heating), and in this case, the furnace main body Z31 is formed of a conductive metal. Alternatively, the sample container 100 or the sample W accommodated in the furnace main body Z31 may be induction-heated.

The gas analyzer Z4 analyzes the component gas generated in the heating furnace Z1 to determine the content of each component contained in the sample W. In the present embodiment, for example, analysis is performed using a non-dispersive infrared absorption method (NDIR method). Specifically, the gas analyzer Z4 includes a non-dispersive infrared detector that is not illustrated, and detects CO₂, CO, SO₂, and the like contained in the gas led out from the heating furnace Z1 to determine the contents of carbon (C), sulfur (S), and the like contained in the sample W.

In the present embodiment, the heating furnace Z1 and the gas analyzer Z4 are unitized to constitute one analysis unit 200Z. The analysis unit 200Z may be configured to be movable by casters or the like.

The stocker unit 200X includes, for example, a plurality of stages of shelves, and includes a storage shelf X1 on which a plurality of sample containers 100 is placed, and a handling mechanism X2 that picks up one of the sample containers 100 from the storage shelf X1 and moves the sample container to a receiving position P in the container supply unit 200Y. The stocker unit 200X may also be configured to be movable by casters or the like.

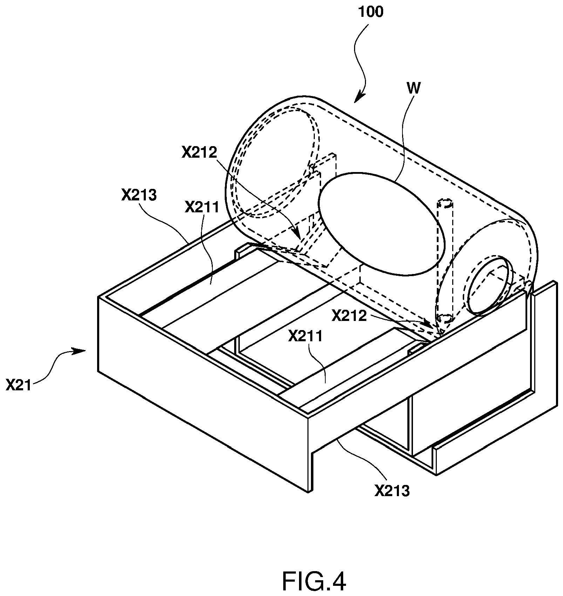

As illustrated in FIG. 4, the handling mechanism X2 includes a hand X21 that lifts the substantially cylindrical sample container 100 from below. The hand X21 includes two support members X211 that support an outer surface of the sample container 100 from below, and a plate-like lid body X213 that is disposed in a state of being separated from both ends of the sample container 100 by a predetermined distance and prevents the sample W in the sample container 100 from coming out from both ends. A V-shaped groove X212 on which the cylindrical sample container 100 is placed is formed at the center of each support member X211. In a state where the sample container 100 is placed on the hand X21 as described above, the sample container 100 is rotatable about the horizontal axis, but the sample W can be conveyed in a stable state so as not to come out of the sample container 100.

As illustrated in FIG. 1(b), the container supply unit 200Y receives the sample container 100 from the stocker unit 200X, and supplies the sample container 100 through the opening Z3H formed in the side wall of the heating furnace Z1. Specifically, the container supply unit 200Y is provided to relay between the stocker unit 200X and the analysis unit 200Z. Further, the container supply unit 200Y includes a first container supply mechanism Y1 configured to move the sample container 100 from the receiving position P of the sample container 100 adjacent to the stocker unit 200X to a standby position Q set outside the heating furnace Z1, and a second container supply mechanism Y2 configured to move the sample container 100 from the standby position Q to a combustion position R set inside the heating furnace Z1. In the present embodiment, a moving direction of the sample container 100 from the receiving position P to the standby position Q and a moving direction of the sample container 100 from the standby position Q to the combustion position R are orthogonal to each other in a horizontal plane. Further, the posture of the sample container 100 is kept constant during the movement.

As illustrated in FIG. 1(a), the first container supply mechanism Y1 horizontally moves the sample container 100 from the receiving position P to the standby position Q, and is, for example, a moving table including a motor, a ball screw, a table, and a guide. Here, the standby position Q is a position where the sample container 100 immediately before being heated is set, and is set before the entrance of the heating furnace Z1 in the present embodiment.

As illustrated in FIG. 1(b), the second container supply mechanism Y2 includes an operator Y22 that pushes out the sample container 100 in the horizontal direction, a horizontal direction movement unit Y1 including, for example, an actuator such as a motor or an air cylinder that drives the operator Y22, and a lifting unit Y23 that includes a linear guide mechanism extending in a vertical direction and an actuator such as a motor or an air cylinder, for example, and moves the horizontal direction movement unit Y1 up and down.

In the present embodiment, the operator Y22 may linearly advance and retreat, or may linearly extend and contract. Further, the operator Y22 also functions as an insertion rod for inserting the sample container 100 into the heating furnace Z1 and a draw-out rod for drawing out the sample container 100 from the inside of the heating furnace Z1. A hook portion Y221 which is hooked when the sample container 100 is pulled out is formed at a distal end of the operator Y22.

In a case where the sample container 100 is inserted into the furnace main body Z31 of the heating furnace Z1, a vertical position of the operator Y22 is adjusted by the lifting unit Y23 so that the operator Y22 comes into contact with an outer edge portion of an end surface portion 2 of the sample container 100. Further, when the sample container 100 is pulled out of the heating furnace Z1, the height of the operator Y22 is adjusted by the lifting unit Y23 so that the hook portion Y221 is caught by a part of the sample container 100.

Further, the container supply unit 200Y further includes a disposal mechanism Y3 that disposes of the sample container 100 for which the analysis has been completed. The disposal mechanism Y3 disposes of the container heated by the heating furnace Z1, and includes a disposal portion Y31 having an opening in an upper portion, an opening and closing lid Y32 that closes the opening of the disposal unit Y31, and an actuator (not illustrated) that opens and closes the opening by lowering the opening and closing lid Y32. Here, the sample container 100 pulled out from the heating furnace Z1 is disposed on the upper surface of the opening and closing lid Y32, and the actuator lowers the opening and closing lid Y32 to dispose of the sample container in the disposal unit Y31. Note that the disposal unit Y31 may be a container or a disposal flow path connected to an external disposal container (not illustrated).

Further, in the present embodiment, the first container supply mechanism Y1, the second container supply mechanism Y2, and the disposal mechanism Y3 are unitized to constitute one container supply unit 200Y. The supply unit 200Y is configured to be movable by casters or the like. Then, the supply unit 200Y is configured to be detachable from the analysis unit 200Z or the stocker unit 200X.

Next, details of the sample container 100 will be described in detail with reference to FIGS. 2, 3, and 5.

The sample container 100 has a substantially hollow cylindrical shape as illustrated in FIGS. 2 and 3, and accommodates a group of samples W having a predetermined volume therein. The sample container 100 is formed of, for example, quartz glass and is transparent, and the sample W accommodated therein can be visually recognized from the outside. Note that the material of the sample container 100 is not limited to quartz glass, and may be other materials such as ceramics. Further, in FIGS. 2 and 3, a ridge line or a contour line outside the sample container 100 is indicated by a solid line, and a ridge line, a valley line, and a contour line inside the sample container 100 are indicated by a dotted line. Further, in FIGS. 2 and 3, the end surface portion 2 pushed and pulled by the operator Y22 of the supply unit 200Y is illustrated as a front surface.

The sample container 100 has a substantially thin hollow cylindrical shape, and includes a cylindrical side wall 1 having an accommodation space formed inside in which the sample W is accommodated, an end surface portion 2 provided at one end of the cylindrical side wall 1, and a sample insertion port 6 that opens at the other end of the cylindrical side wall 1 and through which the sample W is inserted into the accommodation space. Here, the diameter of the sample insertion port 6 is set to 25 mm, for example, and is formed to be larger than a vent hole 4 described later. Further, as illustrated in FIG. 4, an outer diameter dimension of the cylindrical side wall 1 portion of the sample container 100 is set to be substantially the same as an inner diameter dimension of the heating furnace Z1.

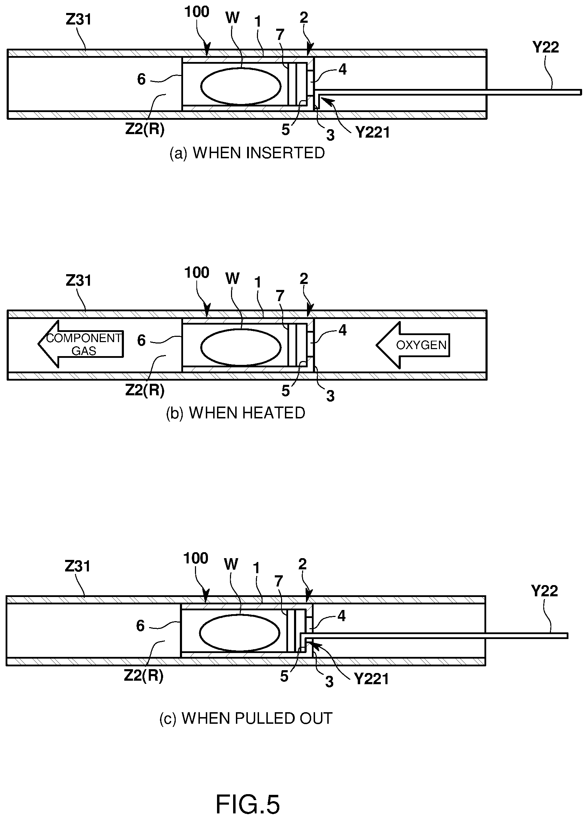

The end surface portion 2 includes a vent hole 4 opened in a central portion for supplying oxygen (O₂) which is a combustion gas into the accommodation space at the time of heating as illustrated in FIG. 5(b). In addition, as illustrated in FIG. 5(a), an annular pressed surface 3 which is pressed by a tip portion of a rod which is the operator Y22 when the sample container 100 is inserted into the heating furnace Z1 is formed around the vent hole 4 outside the end surface portion 2. In addition, the annular surface around the vent hole 4 inside the end surface portion 2 acts as a hooked portion 5 on which the hook of the rod serving as the operator Y22 is hooked when the sample container 100 is pulled out from the inside of the heating furnace Z1 as illustrated in FIG. 5(c). Specifically, the diameter of the vent hole 4 is set to a size through which the hook portion Y221 of the rod can pass, and is set to, for example, a diameter of 13 mm. After the hook portion Y221 is inserted into the sample container 100, the operator Y22 moves radially outward, to thereby hook the hook portion Y221 on the hooked portion 5.

Furthermore, in the sample container 100, an entry prevention member 7 is provided on a side of the one end (side of the end surface portion 2) to prevent the rod from entering the other end side (insertion port 6 side) beyond the position of the rod. The entry prevention member 7 is a cylindrical member extending in the radial direction in the sample container 100, and is disposed so as to overlap the vent hole 4 when viewed from the front side as illustrated in a front view of FIG. 3. That is, it is configured such that, even if the rod, which is the operator Y22, is inserted from the vent hole, the rod interferes with the entry prevention member 7, so that the rod does not interfere with the sample W accommodated therein. Further, the periphery of the entry prevention member 7 remains hollow so as not to block the inside of the accommodation space.

### <Effect of present embodiment>

According to the sample container 100 of the present embodiment, since a large accommodation space for accommodating the sample W can be formed in the cylindrical side wall 1, for example, even if the sample W is a non-standard shape solid, it is easy to accommodate the sample W therein. Therefore, even a sample W having a shape or a size that is conventionally directly inserted into the heating furnace Z1 can be stably accommodated in the sample container 100.

Further, since the outer shape of the sample container 100 is formed to be cylindrical and substantially coincident with the cylindrical furnace main body 31 of the heating furnace Z1, the sample container 100 is naturally guided along the axial direction when the sample container 100 is inserted into the heating furnace Z1. Thus, stability of the holding state of the sample W when the sample container 100 is inserted into or pulled out of the heating furnace Z1 can be enhanced, and stability of handling by the second container supply mechanism Y2 can be enhanced. Therefore, the time required for taking in and out the sample container 100 into and from the heating furnace Z1 can be kept constant, and the heating time of the sample W can be kept constant to suppress variation for each analysis.

Furthermore, since the sample W is accommodated in the cylindrical side wall 1 in a state of being almost entirely covered, and the sample container 100 is formed of quartz glass, the sample W is less likely to be directly heated as compared with the boat-type sample container 100 whose upper surface is largely opened. In addition, since the sample container 100 is formed of quartz glass and is a member that has a large heat capacity and difficult to conduct heat, the start time of combustion of the sample W can be made later than in conventional cases. That is, the sample container 100 is sufficiently heated, and for example, the sample W can start to burn after the element to be analyzed adhering to the cylindrical side wall 1 is sufficiently desorbed. Therefore, contamination in the component gas extracted from the sample W can be easily removed, and the analysis accuracy by the analysis unit 200Z can be improved.

In addition, since the sample container 100 is rotatable only in the circumferential direction in the furnace main body Z31, the direction and posture of the hooked portion 5 formed as the inner surface of the end surface portion 2 do not change, and it is possible to reliably maintain a state of being easily hooked on the hook portion Y221 of the rod which is the operator Y22.

In addition, it is not necessary to select a size or the like as to whether insertion into the heating furnace Z1 is possible as in a case of direct insertion.

### <Other modified embodiments>

Note that the present invention is not limited to the above-described embodiment.

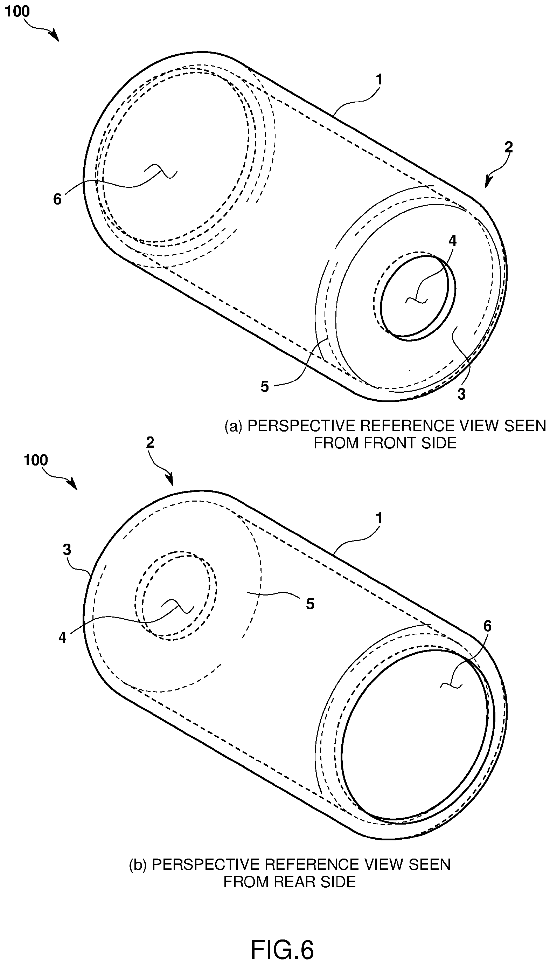

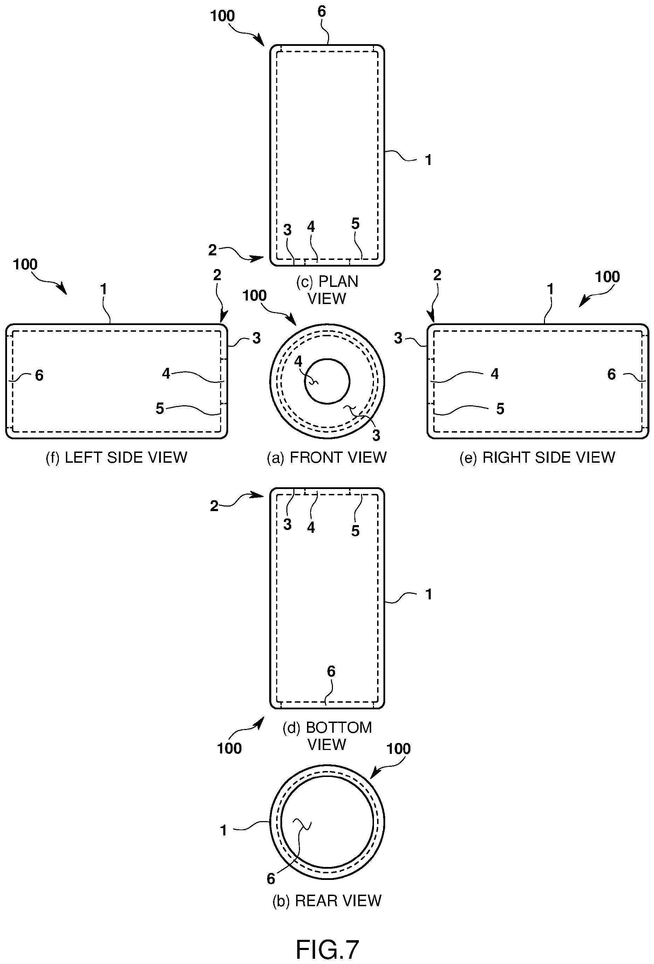

As illustrated in FIGS. 6 and 7, the sample container 100 may not include the entry prevention member 7.

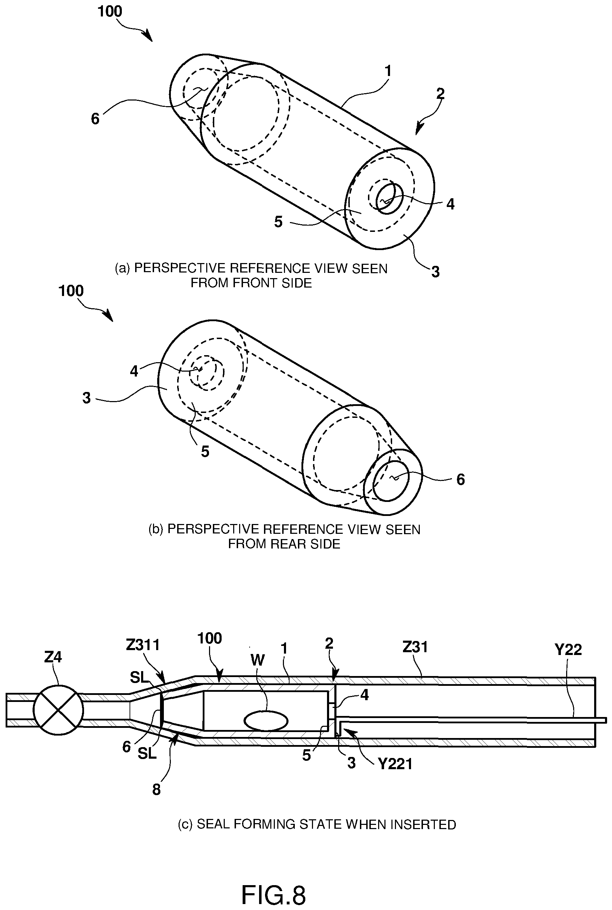

As illustrated in FIGS. 8(a) and 8(b), the entire cylindrical side wall 1 of the sample container 100 may not be cylindrical, and for example, an outer peripheral surface may be formed in a tapered shape for an end that is a portion opposite to the end surface portion and is disposed on the element analyzer Z4 side. That is, by tapering the insertion port 6 side of the sample container 100 in a truncated cone shape, as illustrated in FIG. 8(c), a tip portion of the sample container can be brought into line contact in a circular shape with a narrowing portion tapering toward the element analyzer Z4 side on a deep side of the furnace main body Z31 to form a seal SL. That is, even if there is a slight gap between a cylindrical portion of the cylindrical side wall 1 and a cylindrical portion of the furnace main body Z31 and oxygen as combustion gas can pass therethrough, the amount of leakage to the element analyzer Z4 side can be reduced by the seal SL formed between the tip of the sample container 100 and the narrowing portion. Thus, the amount of oxygen used as combustion gas can be reduced, and the efficiency of supplying oxygen from the vent hole 4 to the sample W can be improved. Therefore, combustion efficiency of the sample W can be made higher than in conventional cases.

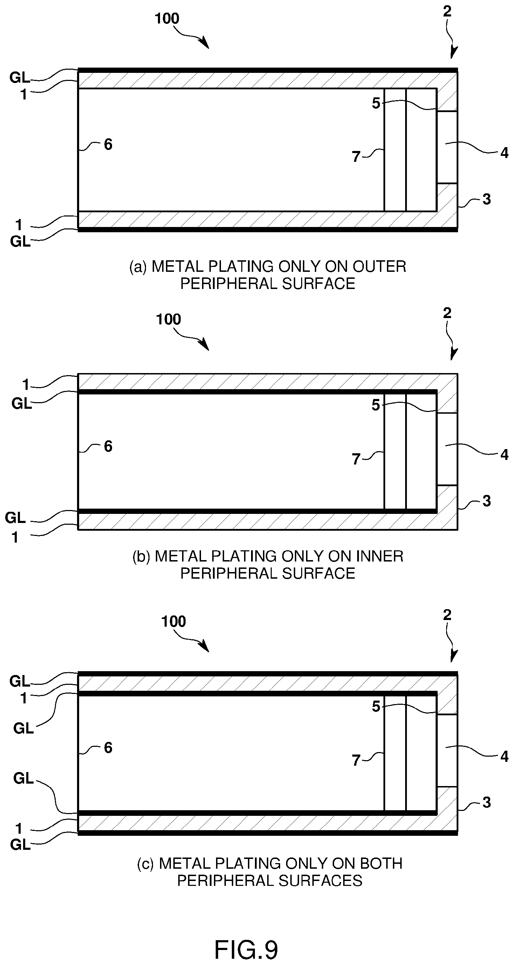

As illustrated in FIG. 9, metal plating GL such as gold plating or nickel plating may be applied to the sample container 100 in order to prevent an element to be analyzed from adhering and causing contamination. Specifically, as illustrated in FIG. 9(a), the metal plating GL may be applied only to an outer peripheral surface of the cylindrical side wall 1, or as illustrated in FIG. 9(b), the metal plating GL may be applied only to an inner peripheral surface of the cylindrical side wall. In addition, as illustrated in FIG. 9(c), the metal plating GL may be applied to both the outer peripheral surface and the inner peripheral surface of the cylindrical side wall 1. In this way, for example, carbon dioxide (CO₂) containing carbon (C), which is an element to be analyzed, can be prevented from adhering to the surface of the sample container 100, and mixing of CO₂, which is a component gas generated by combustion of the sample W, as contamination can be prevented. Note that the metal plating is only required to be metal that does not melt at a temperature in the furnace main body Z31 necessary for combusting the sample W and CO₂ hardly adheres. In addition, the cylindrical side wall 1 is a portion having the largest surface area in the sample container 100, and it is possible to sufficiently prevent the adhesion of CO₂ without applying metal plating to other portions such as the end surface portion, but metal plating may be applied to all the portions.

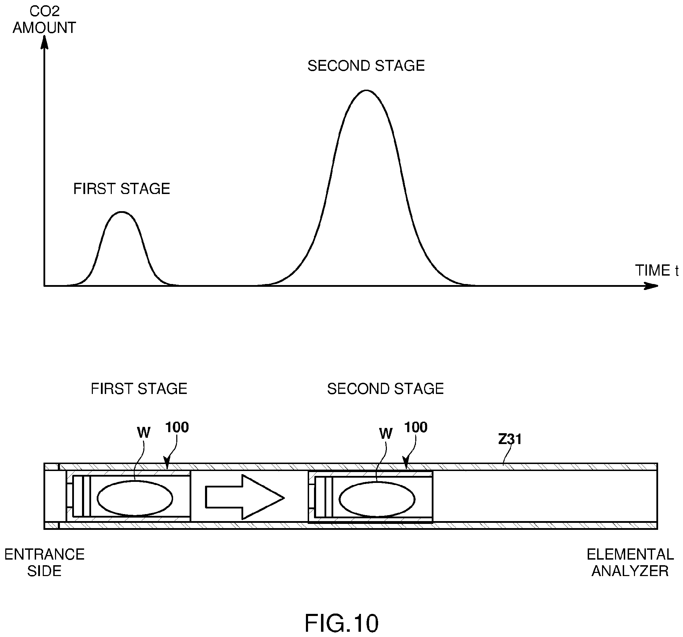

In order to enable prevention of contamination in elemental analysis without performing metal plating GL on the sample container 100, it is only required to perform heating by changing the position of the sample container 100 in the furnace main body Z31 in stages as illustrated in FIG. 10. Specifically, first, the sample container 100 is disposed on an entrance side of the furnace main body Z31 where the temperature is lower than in the central portion and combustion of the sample W does not occur. In preheating in this first stage, CO₂ and the like adhering to the heated sample container 100 are desorbed, and a small amount of CO₂ is detected in a graph by the element analyzer Z4. When CO₂ is no longer detected by the element analyzer Z4 or when the heating of the sample container 100 on the entrance side is completed for a predetermined time, the sample container 100 is pushed into the central portion of the furnace main body Z31. In this second stage, main heating is started in the central portion to be at the highest temperature, and combustion of the sample W is started. In this state, since CO₂ that causes contamination is not attached to the sample container 100, a large amount of CO₂ detected by the element analyzer Z4 can be almost only the component gas (CO₂) extracted from the sample W generated by combustion as illustrated in the graph. If the sample container 100 is heated in stages in this manner, contamination in elemental analysis can be reduced.

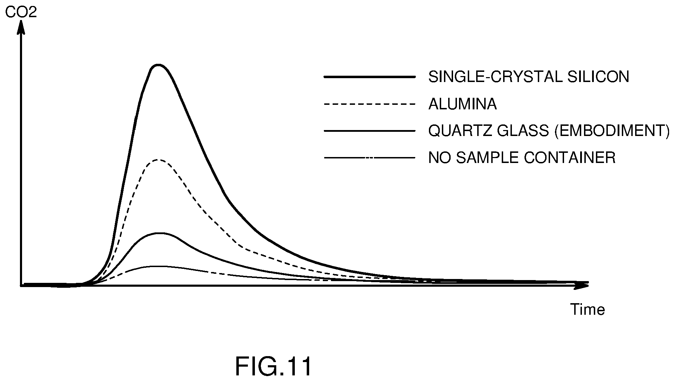

In the above embodiment, the sample container is formed with quartz glass, but may be formed with another material. However, in consideration of manufacturing cost and a small amount of CO₂ generated in blank measurement, it is preferable to form the sample container with quartz glass. FIG. 11 illustrates results of blank measurement in cases of single-crystal silicon, alumina, the sample container of the embodiment, and absence of the sample container in the furnace. It can be seen that a larger amount of CO₂ is generated in blank measurement in the case of using the single-crystal silicon or alumina than in the case of forming with quartz glass.

In the above embodiment, the sample container has a cylindrical shape, but may be formed in a cylindrical shape having a polygonal cross-sectional shape, for example. In addition, the internal shape of the heating furnace and the outer diameter shape of the sample container are not limited to matching shapes, and a gap may be formed between the inside of the heating furnace and the outer surface of the sample container.

In the above embodiment, the hooked portion is formed on the end surface portion, but a ring-shaped member or the like on which the hook portion of the rod is hooked may be separately provided on the one end side of the sample container. That is, a part of the rod may be hooked on the hooked portion without passing through the vent hole.

The entry prevention member is not limited to a columnar shape, and may have other shapes. For example, it may be a plate-like member that partitions the inside of the sample container, and a hole through which the combustion gas can pass may be formed in a part thereof.

Further, the configurations of the supply unit and the stocker unit are not limited to those described in the above embodiment, and various configurations can be selected according to a surrounding structure.

In addition, various embodiments may be modified or combined as long as it does not contradict the gist of the present invention.

### Industrial Applicability

A sample container is provided in which an element adhering to the sample container, which cause contamination, can be desorbed and removed before generation of the component gas, and analysis accuracy is improved.

## Claims

1. A sample container used in an element analysis device that heats a sample and extracts and analyzes a component gas, the sample container being inserted into a heating furnace included in the element analysis device in a state of accommodating the sample, the sample container comprising:
a cylindrical side wall having a substantially hollow cylindrical shape;
an end surface portion provided at one end of the cylindrical side wall and including at least a pressed surface to be pressed by a rod when being inserted into the heating furnace, and a vent hole through which a gas passes when the sample is heated; and
a hooked portion which is provided at the one end of the cylindrical side wall and on which a rod is hooked when being taken out from an inside of the heating furnace.

2. The sample container according to claim 1, wherein
the vent hole has a size through which a part of the rod is possible to pass, and
the hooked portion is a surface on an inner side of the sample container at the end surface portion.

3. The sample container according to claim 1 or 2, wherein
the heating furnace includes a furnace main body having a substantially hollow cylindrical shape having a predetermined inner diameter dimension, and
the cylindrical side wall has a substantially hollow cylindrical shape, and an outer shape dimension thereof is substantially same as an inner diameter dimension of the furnace main body.

4. The sample container according to any one of claims 1 to 3, wherein
a sample insertion port for inserting the sample into the sample container is opened at another end of the cylindrical side wall, and
an inner diameter dimension of the sample insertion port is formed to be larger than an inner diameter dimension of the vent hole.

5. The sample container according to any one of claims 1 to 4, further comprising an entry prevention member that is provided on a side of the one end in the cylindrical side wall and prevents a rod inserted from the vent hole from entering a side of the other end from a predetermined position.

6. The sample container according to any one of claims 1 to 5, wherein
metal plating is applied to at least an outer peripheral surface or an inner peripheral surface of the cylindrical side wall.

7. The sample container according to any one of claims 1 to 6, wherein at least the cylindrical side wall is formed of quartz glass.

8. An element analysis device, comprising:
the sample container according to any one of claims 1 to 7; and
the heating furnace including a furnace main body having a cylindrical shape at least a part of which has an inner diameter dimension substantially coinciding with an outer diameter dimension in a radial direction in at least a part of the cylindrical side wall of the sample container.

9. The element analysis device according to claim 8, further comprising:
a gas analyzer that analyzes an extracted component gas, wherein
a narrowing portion tapering toward a side of the gas analyzer is formed on the side of the gas analyzer of the furnace main body, and
an outer peripheral surface of the cylindrical side wall of the sample container on a side opposite to the end surface portion is formed in a tapered shape.
